# EUROPEAN PATENT SPECIFICATION

(11) **EP 4 295 736 B1**
(45) Date of publication and mention of the grant of the patent: **29.10.2025**
(21) Application number: 22198952.8
(22) Date of filing: 30.09.2022
(51) Int. Cl.: A47L 9/00

(54) **COLLISION DETECTION APPARATUS AND CLEANING DEVICE**
KOLLISIONSERKENNUNGSVORRICHTUNG UND REINIGUNGSVORRICHTUNG
APPAREIL DE DÉTECTION DE COLLISION ET DISPOSITIF DE NETTOYAGE

(30) Priority: 24.06.2022 CN 202221594236 U
(43) Date of publication of application: 27.12.2023
(73) Proprietor: Beijing Xiaomi Mobile Software Co., Ltd., Beijing 100085 (CN)
(72) Inventor: GU, Erdong, Beijing, 100085 (CN)
(74) Representative: Dompatent Partnerschaft von Patent- und Rechtsanwälten mbB

(56) References cited:
- CN-A- 112 545 386
- CN-U- 208 958 000

## Description

### TECHNICAL FIELD

The invention relates to the field of cleaning devices, in particular to a collision detection apparatus and a cleaning device.

### BACKGROUND

With the development of technologies, smart home products are applied more and more extensively, such as the application of cleaning devices like a sweeping robot. The sweeping robot usually uses a sensor such as a Laser Distance Sensor (LDS) for automatic navigation so as to achieve cleaning and dust absorption of the floor. The LDS is generally located at the highest position of the sweeping robot, and a height of the LDS determines the ability of the sweeping robot to enter a low space.

During the operation of the sweeping robot, collision detection is used to avoid or bypass obstacles. In the related art, structures for collision detection of the sweeping robot are relatively complex and need to be improved.

CN112545386A relates to a collision switch assembly and a sweeping robot. The collision switch assembly includes a photoelectric switch, which is configured to generate a collision signal in response to triggering; a moving piece, which is located on one side of the photoelectric switch, and is constructed to be capable of moving in the first direction in response to contact type collision; and triggering piece, which is connected with the moving piece. The moving piece can drive the triggering piece to move between a first position and a second position in the first direction; and the trigger piece is provided with a moving path capable of continuously triggering the photoelectric switch in the moving process when the trigger piece does not reach the first position and the second position. According to the collision switch assembly and the sweeping robot provided by the disclosure, the photoelectric switch is arranged, the triggering piece does not need to trigger the collision switch through mechanical collision, and after an anti-collision plate is collided and the triggering piece triggers the photoelectric switch, the triggering piece can still continue to retreat to be continuously triggered, so that a buffer space is reserved for movement of the triggering piece, and the collision switch assembly is prevented from being damaged due to collision of the moving part with other peripheral parts.

CN208958000U provides a sweeping robot, and relates to the technical field of sweeping equipment. The sweeping robot comprises a base; the front collision assembly is arranged at the front end of the base; the collision sensor is arranged on the base and located behind the front collision assembly. The crash sensor includes: a base; the photoelectric switch is arranged on the base and comprises a transmitting end and a receiving end; the collision branch is rotatably arranged on the base, and one end of the collision branch abuts against the inner wall of the front collision assembly; there set piece provides force for the collision branch to rotate in the first direction. And when the collision branch is subjected to external force opposite to the first direction, the other end of the collision branch leaves the space between the transmitting end and the receiving end, so that the photoelectric switch is in a connected state. After the sweeping robot encounters an obstacle, the collision branch can leave the space between the transmitting end and the receiving end immediately, the collision sensor can send out a collision signal immediately, the single-chip microcomputer can control the sweeping robot to turn and sweep in time, and the sweeping efficiency is improved.

### SUMMARY

In order to overcome the problems existing in the related art, the disclosure provides a collision detection apparatus and a cleaning device.

According to a first aspect of the invention, a collision detection apparatus is provided, including:
a base, provided with a switch and an elastic assembly, where one end of the elastic assembly is connected with the base, and the other end is connected with the switch; and
a cover, movably connected with the base to move within a set range, where the cover has an abutting part, and the abutting part is clamped with a preset portion of the elastic assembly; where
under a state that the cover has a collision and moves in a set direction, the abutting part is forced to push the preset portion, so as to drive the other end of the elastic assembly to trigger the switch, and the switch is configured to report a collision event when being triggered.

Optionally, a bottom plate of the cover is provided with a plurality of limiting holes, and the cover is movably connected with the base through the limiting holes.

Optionally, the limiting holes extend by a first distance in a first direction, so that the cover can move by the first distance in the first direction.

Optionally, the collision detection apparatus further including first fixing pieces;
one ends of the first fixing pieces are assembled with the limiting holes, and the other ends of the first fixing pieces are fixedly connected with the base, so as to connect the cover with the base.

Optionally, the abutting part includes an inclined unit, under the state that the cover has a collision and moves in the set direction, the inclined unit is configured to push the preset portion.

Optionally, the cover includes a bottom plate, the bottom plate has a limiting part, and one end of the limiting part has a first slope;
a matching part is at a position, corresponding to the limiting part, of the base, and one end of the matching part has a second slope; and the first slope is in sliding contact with the second slope, so that the limiting part is in sliding connection with the matching part.

Optionally, the abutting part is at a position, at a first predetermined distance from a first side of the bottom plate, of the bottom plate; and
the limiting part is at a position, at a second predetermined distance from a second side of the bottom plate, of the bottom plate and/or at a position, at a third predetermined distance from a third side of the bottom plate, of the bottom plate, the second side and the third side are oppositely disposed, and the first slope is at one end, away from the abutting part, of the limiting part.

Optionally, the first side close to and preferably facing the inclined unit of the abutting part.

Optionally, the elastic assembly includes a torsion spring and a second fixing piece; the second fixing piece is vertically fixed on the base, and the torsion spring is connected to the second fixing piece; and
the preset portion is a connection portion of the torsion spring and the second fixing piece.

Optionally, the torsion spring includes a main body part, a first arm, and a second arm;
the main body part sleeves the second fixing piece, one end of the first arm is connected with one end of the main body part, and the other end of the first arm is connected with the base; and one end of the second arm is connected with the other end of the main body part, and the other end of the second arm is in contact connection with the switch.

Optionally, a first support part and a second support part are on the base, the first arm is fixedly connected with the first support part, and a set position of the second arm is in overlap joint with the second support part.

Optionally, the elastic assembly includes a tension spring and a swing rod;
one end of the tension spring is fixedly connected with the base, the other end of the tension spring is connected with one end of the swing rod, and the other end of the swing rod is connected with the switch; and
the preset portion is a connection portion of the tension spring and the swing rod.

Optionally, the switch includes a trigger structure, and the other end of the elastic assembly is in abutting connection with the trigger structure.

Optionally, the switch includes a light emitting part and a light receiving part, and a light path of the light emitting part is opposite to a light path of the light receiving part; and
under the state that the cover has a collision and moves in the set direction, the other end of the elastic assembly moves to a position between the light emitting part and the light receiving part so as to cut off the light paths.

According to a second aspect of an example of the disclosure, a cleaning device is provided, including the collision detection apparatus described in the first aspect.

The technical solutions provided by the examples of the disclosure can include the following beneficial effects.

In the structure of the disclosure, the abutting part disposed on the cover is matched with the elastic assembly, when a collision external force exists, the abutting part moves to drive the elastic assembly to move so as to trigger the switch, so that the switch can report a collision event in time when being triggered. In the disclosure, the structure is simple, and the collision detection sensitivity and efficiency are high.

It can be understood that the above general descriptions and the following detailed descriptions are illustrative and explanatory, and are not intended to limit the disclosure.

### BRIEF DESCRIPTION OF THE DRAWINGS

The accompanying drawings here, which are incorporated in and constitute a part of this specification, illustrate examples consistent with the disclosure and, together with the specification, serve to explain the principles of the invention.
Fig. 1 is a schematic diagram of a collision detection apparatus according to the invention.
Fig. 2 is a schematic diagram of a collision detection apparatus according to the invention.
Fig. 3 is a schematic diagram of a cover according to an example of the invention.
Fig. 4 is a schematic diagram of a base according to an example of the invention.
Fig. 5 is a top view of a collision detection apparatus according to an example of the invention.
Fig. 6 is a top view of a base according to an example of the invention.
Fig. 7 is a top view of a base according to another example of the invention.

### DETAILED DESCRIPTION

Examples will be described in detail herein, instances of which are illustrated in the accompanying drawings. When the following description refers to the accompanying drawings, the same numerals in different accompanying drawings refer to the same or similar elements unless otherwise indicated. The implementations described in the examples below are not intended to represent all implementations consistent with the invention. Rather, they are merely instances of apparatuses and methods consistent with some aspects of the disclosure.

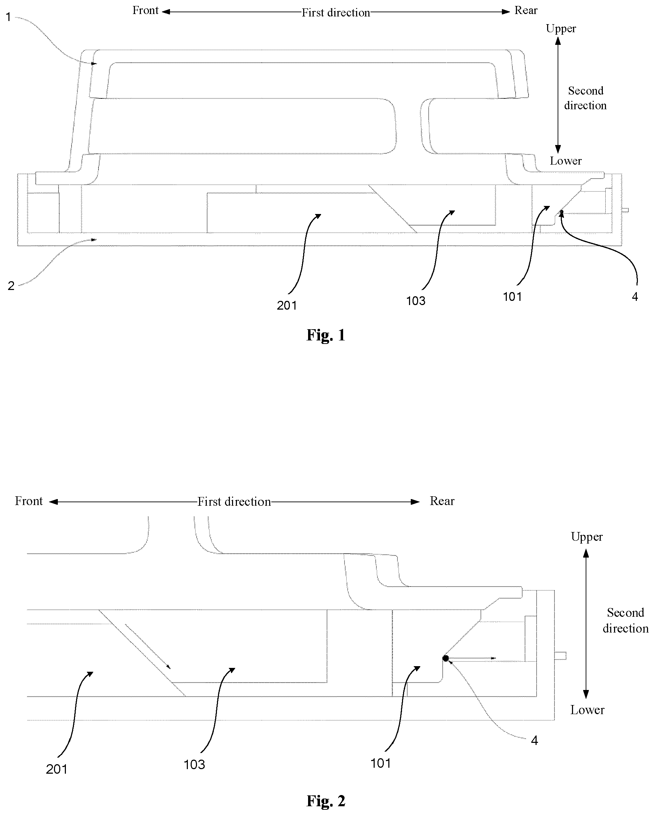

In the invention, as shown in Fig. 1 to Fig. 7, a collision detection apparatus includes a cover 1, a base 2, a switch 3 and an elastic assembly 4.

The switch 3 is disposed in the base 2. The elastic assembly 4 is disposed in the base 2, one end of the elastic assembly 4 is connected with the base 2, and the other end of the elastic assembly 4 is connected with the switch 3. One side of the cover 1 is movably connected with the base 2 to move within a set range. An abutting part 101 is disposed on one side of the cover 1, and the abutting part 101 is clamped with a preset portion of the elastic assembly 4. Under a state that the cover 1 has a collision and moves in a set direction, the abutting part 101 is forced to push the preset portion, so as to drive the other end of the elastic assembly 4 to press and trigger the switch 3, and the switch 3 is configured to report a collision event when being triggered.

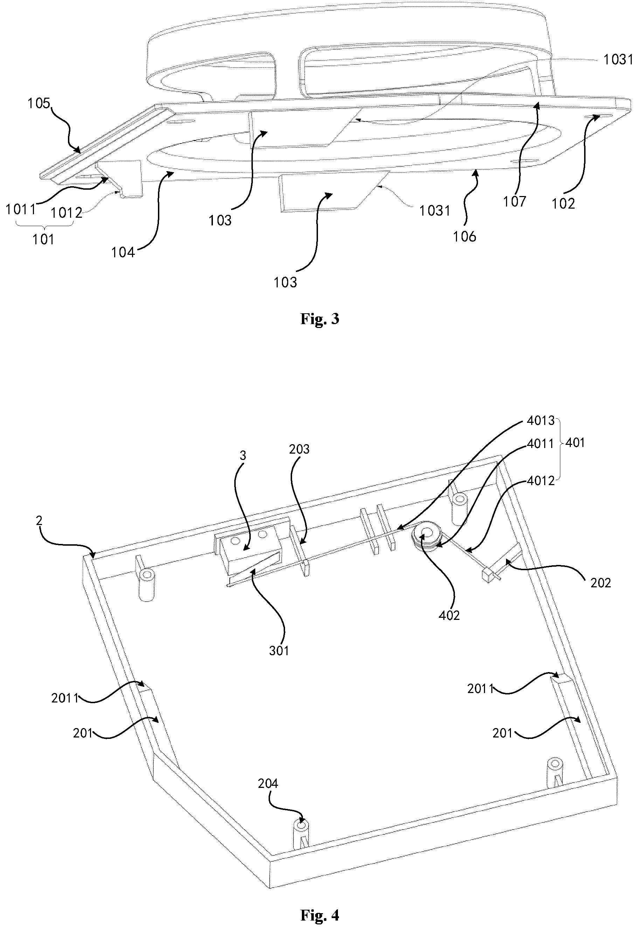

In the invention, as shown in Fig. 1 and Fig. 3, a first side of the cover 1 is assembled with the base 2, and a second side of the cover 1 forms a protruding protective cover. In the example of the invention, taking a cleaning device being a sweeping robot as an example for description. A laser distance sensor (LDS) of the sweeping robot is disposed in the protective cover, and the cover 1 can realize the protection of the LDS and can also improve the aesthetics of the sweeping robot. As shown in Fig. 1 or Fig. 3, the protective cover of the cover 1 may be provided with a notch to reduce the weight and not affect the detection of the LDS. The cover 1 includes a bottom plate 104, a hollowed-out region is disposed in a central portion of the bottom plate 104, and the hollowed-out region communicates with the notch on the protective cover.

In an example, as shown in Fig. 4, a containing cavity may be formed inside the base 2 and is configured to contain circuit components (not shown in the figure) of the sweeping robot, the switch 3 and the elastic assembly 4. Both the switch 3 and the LDS are in communication connection with a processor or main controller of the sweeping robot. When the switch 3 is triggered, the collision event will be reported to the processor or the main controller, so that the processor or the main controller can control the sweeping robot to avoid obstacles.

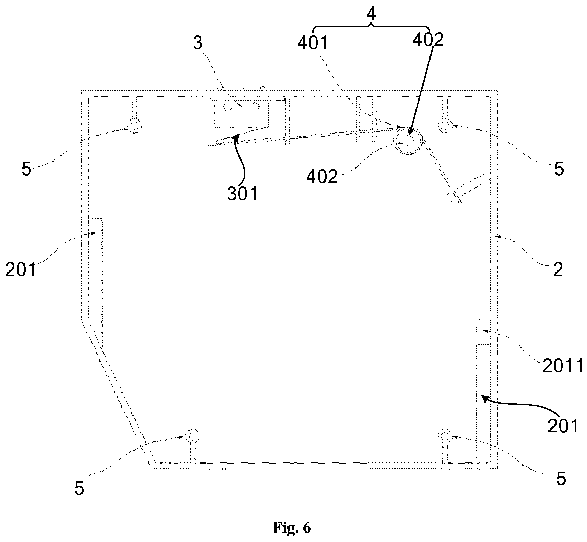

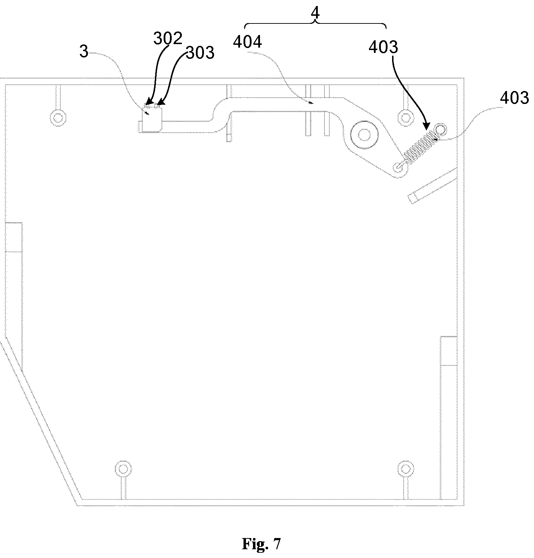

Referring to Fig. 6 or Fig. 7, the switch 3 may be either a mechanical switch or a photoelectric switch. As shown in Fig. 4, one end of the elastic assembly 4 is connected with the base 2, and the other end of the elastic assembly 4 is configured to trigger the switch 3 during the collision.

In an example, the cover 1 is connected with the base 2, and may move relative to the base 2 within a set range under a connection state. Referring to Fig. 1, combined with a direction in which the sweeping robot has a collision, the set range includes: moving by a set distance in the set direction.

The set direction includes a first direction or a second direction. When the sweeping robot moves, the first direction is also a moving direction of the sweeping robot in a horizontal direction. The second direction may be a vertical direction. The set range includes, for example, moving by a first distance in the first direction, and/or moving by a second distance in the second direction.

In one example, when the front of the sweeping robot has a collision, the cover 1 may move backwards in the first direction, and the abutting part 101 of the cover 1 is configured to push and squeeze the preset portion of the elastic assembly 4, so as to trigger the switch 3 through the elastic assembly 4.

In another example, when the top (upper portion) of the sweeping robot has a collision, the cover 1 may move downwards in the second direction, and the abutting part 101 of the cover 1 is configured to push and squeeze the preset portion of the elastic assembly 4, so as to trigger the switch 3 through the elastic assembly 4.

In the collision detection apparatus of the disclosure, the abutting part 101 disposed on the cover 1 is matched with the elastic assembly 4, when a collision external force exists, the abutting part 101 moves to drive the elastic assembly 4 to move so as to trigger the switch 3, so that the switch 3 can report the collision event in time when being triggered. In the disclosure, the structure is simple, and the collision detection sensitivity and efficiency are high.

In an example, as shown in Fig. 1 to Fig. 7, in the collision detection apparatus of the an example, a plurality of limiting holes 102 are formed in the bottom plate 104 of the cover 1, and the cover 1 is movably connected with the base 2 through the limiting holes 102.

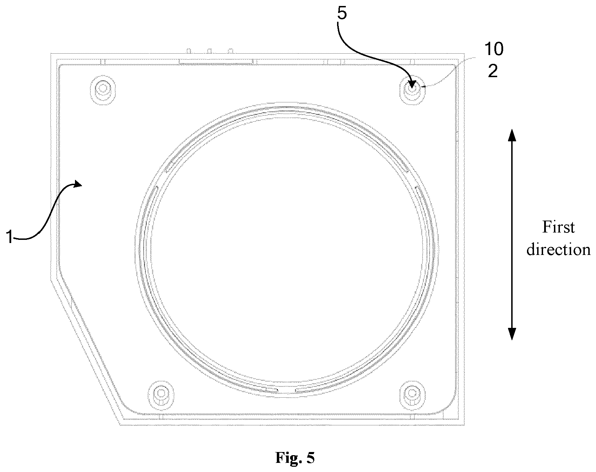

In an example, as shown in Fig. 5, the plurality of limiting holes 102 may be formed at intervals in a circumferential direction of the bottom plate 104 of the cover 1, and the cover 1 and the base 2 are movably connected by the limiting holes 102 in the cover 1.

In an example, the collision detection apparatus further includes first fixing pieces 5, one end of the first fixing pieces 5 are assembled with the limiting holes 102, and the other end of the first fixing pieces 5 are fixedly connected with the base 2, so as to connect the cover 1 with the base 2. The first fixing pieces 5 may be screws, one ends of the screws are assembled with the limiting holes 102 in a limited manner, and the other ends of the screws are fixedly connected with bolt columns 204 on the base 2.

In an example, the limiting holes 102 extend by a first distance in the first direction, so that the cover 1 can move by the first distance in the first direction. As shown in a direction of Fig. 5, under an assembled state of the screws and the limiting holes 102, an extending distance of each limiting hole 102 in the first direction is greater than a diameter of the corresponding screw, so that the cover 1 can move by the first distance in the first direction, for example, the limiting holes 102 may be racetrack-type holes.

In an example, as shown in Fig. 1 to Fig. 7, in the collision detection apparatus, the abutting part 101 includes an inclined unit 1011 and a vertical unit 1012 which are connected, and under a state of no collisions, a clamping structure formed by the inclined unit 1011 and the vertical unit 1012 is clamped with the preset portion. The inclined unit 1011 is configured to push the preset portion under the state that the cover 1 has a collision and moves in the set direction.

In an example, the set direction includes the first direction or the second direction, and the second direction is the vertical direction. As shown in Fig. 1 to Fig. 3, the abutting part 101 is configured as a wedge-shaped block, an obtuse-angle clamping structure is formed between the inclined unit 1011 and the vertical unit 1012 of the abutting part 101, and the inclined unit 1011 forms a slope. When the sweeping robot has no collisions, the clamping structure is clamped with the preset portion of the elastic assembly 4. When the sweeping robot has a collision, the cover 1 moves to drive the abutting part 101 to move, and the inclined unit 1011 of the abutting part 101 will push the preset portion, so that the elastic assembly 4 triggers the switch 3.

In an example, as shown in Fig. 1 to Fig. 7, in the collision detection apparatus, the cover 1 includes the bottom plate 104, and limiting parts 103 are disposed on the bottom plate 104, and first slopes 1031 are disposed at one ends of the limiting parts 103. Matching parts 201 are disposed at positions, corresponding to the limiting parts 103, of the base 2, and one ends of the matching parts 201 are provided with second slopes 2011. The first slopes 1031 are in sliding contact with the second slopes 2011, so that the limiting parts 103 and the matching parts 201 are in sliding connection.

In the example, when the sweeping robot has a collision from the front or the top (upper portion), the cover 1 will move in the first direction or the second direction. During the movement, the limiting parts 103 can effectively limit a moving distance of the cover 1, and the first slopes 1031 of the limiting parts 103 and the second slopes 2011 of the matching parts 201 are slidably matched, so that the stability of the cover 1 in the relative movement process can be effectively improved. In addition, the sliding cooperation between the first slopes 1031 and the second slopes 2011 is also helpful for the reset of the cover 1 when the collision external force disappears, and for details, please refers to the description of the following examples.

In an example, as shown in Fig. 1 to Fig. 7, in the collision detection apparatus of the example, the abutting part 101 is disposed at a position, at a first predetermined distance from a first side 105 of the bottom plate 104, of the bottom plate 104; and the limiting parts 103 are disposed at a position, at a second predetermined distance from a second side 106 of the bottom plate 104, of the bottom plate 104 and/or at a position, at a third predetermined distance from a third side 107 of the bottom plate 104, of the bottom plate 104, the second side 106 and the third side 107 are oppositely disposed, and the first slopes 1031 are located at one ends, away from the abutting part 101, of the limiting parts 103.

In the example, as shown in Fig. 3, the limiting parts 103 may be disposed on one side, or on the second side 106 and the third side 107 separately. Each side may be provided with either one limiting part 103 or two or more limiting parts 103, so as to further improve the stability of the relative movement of the cover 1 and the reset efficiency.

The abutting part 101 is located on a side (the first side 105) of the rear of the cover 1, and the clamping structure formed by the inclined unit 1011 and the vertical unit 1012 in the abutting part 101 faces the elastic assembly 4. The first slopes 1031 of the limiting parts 103 are disposed at one end away from the abutting part 101, and an inclined direction of the first slopes 1031 may match the movement and reset directions of the cover 1.

In combination with movement directions shown by the arrows in Fig. 2, taking the elastic assembly 4 being pushed during the movement of the cover 1 as an example, the first slopes of the limiting parts 103 may slide obliquely downwards from the second slopes 2011 of the matching parts 201, so as to ensure that the cover 1 slides backwards smoothly in the first direction.

In an example, as shown in Fig. 1 to Fig. 7, in the collision detection apparatus, the elastic assembly 4 includes a torsion spring 401 and a second fixing piece 402; the second fixing piece 402 is vertically fixed on the base 2, and the torsion spring 401 is connected to the second fixing piece 402; and the preset portion is a connection portion of the torsion spring 401 and the second fixing piece 402.

The example of the disclosure illustrates the elastic assembly 4 in the form of the torsion spring 401.

In an example, as shown in Fig. 4 and Fig. 6, the second fixing piece 402 may be a structure such as a screw or a stud, and the torsion spring 401 sleeves the second fixing piece 402 so as to be limited and fixed in the base 2. The preset portion may include a main body part 4011 of the torsion spring 401, and the main body part 4011 is in abutting connection with the abutting part 101. When the cover 1 moves due to a collision, the abutting part 101 may push the main body part 4011 to rotate around the second fixing piece 402 to trigger the switch 3.

In an example of the disclosure, the torsion spring 401 includes the main body part 4011, a first arm 4012, and a second arm 4013; the main body part 4011 sleeves the second fixing piece 402, one end of the first arm 4012 is connected with one end of the main body part 4011, and the other end of the first arm 4012 is connected with the base 2; and one end of the second arm 4013 is connected with the other end of the main body part 4011, and the other end of the second arm 4013 is in contact connection with the switch 3. The first arm 4012 and the second arm 4013 extend from the main body part 4011 of the torsion spring 401 respectively, and a length of the first arm 4012 is smaller than that of the second arm 4013. When the cover 1 moves due to a collision, the abutting part 101 may push the main body part 4011 to rotate clockwise around the second fixing piece 402, so that the second arm 4013 triggers the switch 3.

In an example of the disclosure, the base 2 is provided with a first support part 202 and a second support part 203, the first arm 4012 is fixedly connected with the first support part 202, and a set position of the second arm 4013 is in overlap joint with the second support part 203, and the set position is spaced by a third distance from one end of the second arm 4013 for contacting the switch 3. In the example, the set position is, for example, a middle position of the second arm 4013, a middle position of the second arm 4013 is in overlap joint with the second support part 203, and an end portion of the second arm 4013 is in contact with the switch 3. Alternatively, the set position is located between the middle position and one end of the second arm 4013 for contacting the switch 3. The first arm 4012 is snap-fitted or interference-fitted with the first support part 202. Thus, the overlap joint between the second arm 4013 and the second support part 203 can not only effectively support the second arm 4013, but also ensure that the end portion of the second arm 4013 can still move and trigger the switch when the force is applied.

In one example of the disclosure:
as shown in Fig. 1 and Fig. 2, when the front of the sweeping robot has a collision, the cover 1 moves backwards in the first direction, and the inclined unit 1011 of the abutting part 101 pushes backwards the preset portion of the elastic assembly 4. The first arm 4012 of the torsion spring 401 is fixed with the base, the main body part 4011 of the torsion spring 401 rotates clockwise around the second fixing piece 402, an angle between the second arm 4013 and the first arm 4012 becomes larger, and the second arm 4013 triggers the switch 3.

After the collision is eliminated, under the action of the elastic force of the torsion spring 401, the abutting part 101 is pushed to reset, and the first slopes 1031 of the limiting parts 103 in the cover 1 slide relatively with the second slopes 2011 of the matching parts 201, so that the cover 1 ascends to reset.

In another example of the disclosure:
as shown in Fig. 1 and Fig. 2, when the top (upper portion) of the sweeping robot has a collision, the cover 1 moves backwards in the second direction, and the inclined unit 1011 of the abutting part 101 pushes backwards the preset portion of the elastic assembly 4. The first arm 4012 of the torsion spring 401 is fixed with the base, the main body part 4011 of the torsion spring 401 rotates clockwise around the second fixing piece 402, the angle between the second arm 4013 and the first arm 4012 becomes larger, and the second arm 4013 triggers the switch 3.

After the collision is eliminated, under the action of the elastic force of the torsion spring 401, the abutting part 101 is pushed to reset, and the first slopes 1031 of the limiting parts 103 in the cover 1 slide relatively with the second slopes 2011 of the matching parts 201, so that the cover 1 ascends to reset.

In an example, as shown in Fig. 1 to Fig. 7, in the collision detection apparatus, the elastic assembly 4 includes a tension spring 403 and a swing rod 404. One end of the tension spring 403 is fixedly connected with the base 2, the other end of the tension spring 403 is connected with one end of the swing rod 404, and the other end of the swing rod 404 is connected with the switch 3. The preset portion is a connection portion of the tension spring 403 and the swing rod 404.

The example of the disclosure illustrates the elastic assembly 4 in the form of the swing rod 404.

As shown in Fig. 7, when the front or top (upper portion) of the sweeping robot has a collision, the abutting part 101 pushes the preset portion, so that one end, connected with the switch 3, of the swing rod 404 moves to trigger the switch 3. After the collision is eliminated, under a pushing force of the tension spring 403, the abutting part 101 is reset, and the first slopes 1031 of the limiting parts 103 in the cover 1 slide relatively with the second slopes 2011 of the matching parts 201, so that the cover 1 ascends to reset.

In the example of the disclosure, the mode that the tension spring 403 and the swing rod 404 are matched to trigger the switch 3 has higher triggering precision and better sensitivity than the mode of the torsion spring 401.

In an example, as shown in Fig. 1 to Fig. 7, in the collision detection apparatus, the switch 3 includes a trigger structure 301, and the other end of the elastic assembly 4 is in abutting connection with the trigger structure 301.

In an example, as shown in Fig. 4 and Fig. 6, the switch 3 is a mechanical switch, and the trigger structure 301 may be a toggle trigger lever of the switch 3. In a collision scenario, the elastic assembly 4 will push the trigger structure 301 to trigger the switch 3. After the switch 3 is triggered, the switch 3 reports the collision event to the processor or the main controller of the sweeping robot.

In an example, as shown in Fig. 1 to Fig. 7, in the collision detection apparatus of the present example, the switch 3 includes a light emitting part 302 and a light receiving part 303, and a light path of the light emitting part 302 is opposite to a light path of the light receiving part 303; and under the state that the cover 1 has a collision and moves in the set direction, the other end of the elastic assembly 4 moves to a position between the light emitting part 302 and the light receiving part 303 so as to cut off the light paths.

In the present example, as shown in Fig. 7, the switch 3 is a photoelectric switch, such as an infrared light cut-off switch. The infrared light cut-off switch may be in a U shape, one arm of the U shape is provided with the light emitting part 302, and the other arm is provided with the light receiving part 303. In the collision scenario, the elastic assembly 4 will push the swing rod 404, and one end, away from the preset portion, of the swing rod 404 moves to a notch of the U-shaped structure to cut off the light emitting part 302 and the light receiving part 303 so as to trigger the switch 3. After the switch 3 is triggered, the switch 3 reports the collision event to the processor or the main controller of the sweeping robot.

In the example of the disclosure, the photoelectric switch requires less force for triggering, and the swing rod 404 moves to cut off the light paths to achieve triggering, so the sensitivity is further improved.

In an example, the disclosure further provides a cleaning device, including the collision detection apparatus of any one of the foregoing examples.

Other implementation solutions of the disclosure will be apparent to those skilled in the art from consideration of the specification and practice of the disclosure herein. The disclosure is intended to cover any variations, uses, or adaptations of the disclosure following the general principles of the disclosure and including such departures from the disclosure as come within known or customary practice in the art. It is intended that the specification and examples be considered as examples merely, with a true scope of the disclosure being indicated by the following claims.

It will be appreciated that the disclosure is not limited to the exact construction that has been described above and illustrated in the accompanying drawings, and that various modifications and changes may be made without departing from the scope of the invention. It is intended that the scope of the invention merely be limited by the appended claims.

## Claims

1. A collision detection apparatus for a sweeping robot, comprising:
a base (2);
a switch (3), in the base (2);
an elastic assembly (4), in the base (2), wherein one end of the elastic assembly (4) is connected with the base (2), and the other end of the elastic assembly (4) is connected with the switch (3); and
a cover (1), movably connected with the base (2) to move within a set range, wherein the cover (1) has an abutting part (101), and the abutting part (101) is clamped with a preset portion of the elastic assembly (4);
**characterized in that** a first side of the cover (1) is assembled with the base (2), and a second side of the cover (1) form a protruding protective cover that is configured to accommodate a laser distance sensor ,LDS;
wherein under a state that the cover (1) has a collision and moves in a set direction, the abutting part (101) is forced to push the preset portion, so as to drive the other end of the elastic assembly (4) to trigger the switch (3), and the switch (3) is configured to report a collision event when being triggered.

2. The collision detection apparatus according to claim 1, wherein a plurality of limiting holes (102) are in a bottom plate (104) of the cover (1), and the cover (1) is movably connected with the base (2) through the limiting holes (102).

3. The collision detection apparatus according to claim 2, wherein the limiting holes (102) extend by a first distance in a first direction, so that the cover (1) can move by the first distance in the first direction.

4. The collision detection apparatus according to claim 2 or claim 3, further comprising first fixing pieces (5); wherein
one end of the first fixing pieces (5) are assembled with the limiting holes (102), and the other end of the first fixing pieces (5) are fixedly connected with the base (2), so as to connect the cover (1) with the base (2).

5. The collision detection apparatus according to any one of claims 1 to 4, wherein the abutting part (101) comprises an inclined unit (1011), wherein under the state that the cover (1) has a collision and moves in the set direction, the inclined unit (1011) is configured to push the preset portion.

6. The collision detection apparatus according to any one of claims 1 to 5, wherein the cover (1) comprises a bottom plate (104), the bottom plate (104) has a limiting part (103), and one end of the limiting part (103) has a first slope (1031);
a matching part (201) is at a position, corresponding to the limiting part (103), of the base (2), and one end of the matching part (201) has a second slope (2011); and the first slope (1031) is in sliding contact with the second slope (2011), so that the limiting part (103) is in sliding connection with the matching part (201).

7. The collision detection apparatus according to claim 6, wherein the abutting part (101) is at a position, at a first predetermined distance from a first side (105) of the bottom plate (104), of the bottom plate (104); and
the limiting part (103) is at a position, at a second predetermined distance from a second side (106) of the bottom plate (104), of the bottom plate (104) and/or at a position, at a third predetermined distance from a third side (107) of the bottom plate (104), of the bottom plate (104), the second side (106) and the third side (107) are oppositely disposed, and the first slope (1031) is at one end, away from the abutting part (101), of the limiting part (103).

8. The collision detection apparatus according to claim 7, wherein the first side (105) is on the rear of the cover (1).

9. The collision detection apparatus according to any one of claims 1 to 8, wherein the elastic assembly (4) comprises a torsion spring (401) and a second fixing piece (402); the second fixing piece (402) is vertically fixed on the base (2), and the torsion spring (401) is connected to the second fixing piece (402); and
the preset portion is a connection portion of the torsion spring (401) and the second fixing piece (402).

10. The collision detection apparatus according to claim 9, wherein the torsion spring (401) comprises a main body part (4011), a first arm (4012), and a second arm (4013);
the main body part (4011) sleeves the second fixing piece (402), one end of the first arm (4012) is connected with one end of the main body part (4011), and the other end of the first arm (4012) is connected with the base (2); and one end of the second arm (4013) is connected with the other end of the main body part (4011), and the other end of the second arm (4013) is in contact connection with the switch (3).

11. The collision detection apparatus according to claim 10, wherein a first support part (202) and a second support part (203) are on the base (2), the first arm (4012) is fixedly connected with the first support part (202), and a set position of the second arm (4013) is in overlap joint with the second support part (203).

12. The collision detection apparatus according to any one of claims 1 to 11, wherein the elastic assembly (4) comprises a tension spring (403) and a swing rod (404);
one end of the tension spring (403) is fixedly connected with the base (2), the other end of the tension spring (403) is connected with one end of the swing rod (404), and the other end of the swing rod (404) is connected with the switch (3); and
the preset portion is a connection portion of the tension spring (403) and the swing rod (404).

13. The collision detection apparatus according to any one of claims 1 to 12, wherein the switch (3) comprises a trigger structure (301), and the other end of the elastic assembly (4) is in abutting connection with the trigger structure (301).

14. The collision detection apparatus according to any one of claims 1 to 13, wherein the switch (3) comprises a light emitting part (302) and a light receiving part (303), and a light path of the light emitting part (302) is opposite to a light path of the light receiving part (303); and
under the state that the cover (1) has a collision and moves in the set direction, the other end of the elastic assembly (4) moves to a position between the light emitting part (302) and the light receiving part (303) so as to cut off the light paths.

15. A sweeping robot, comprising the collision detection apparatus of any one claims 1-14.

## Patentansprüche

1. Kollisionserkennungsvorrichtung für einen Reinigungsroboter, mit:
einer Basis (2);
einem Schalter (3) in der Basis (2);
einer elastischen Anordnung (4) in der Basis (2), wobei ein Ende der elastischen Anordnung (4) mit der Basis (2) verbunden ist, und das andere Ende der elastischen Anordnung (4) mit dem Schalter (3) verbunden ist; und
einer Abdeckung (1), die bewegbar mit der Basis (2) verbunden ist, um sich innerhalb eines vorgegebenen Bereichs zu bewegen, wobei die Abdeckung (1) einen Anlageteil (101) aufweist, und der Anlageteil (101) mit einem vorgegebenen Bereich der elastischen Anordnung (4) verklemmt ist,
**dadurch gekennzeichnet, dass** eine erste Seite der Abdeckung (1) an der Basis (2) angebracht ist, und eine zweite Seite der Abdeckung (1) eine vorstehende Schutzabdeckung bildet, die dazu ausgebildet ist, einen Laser-Entfernungssensor, LDS, aufzunehmen;
wobei in einem Zustand, dass die Abdeckung (1) eine Kollision erfährt und sich in eine eingestellte Richtung bewegt, der Anlageteil (101) gezwungen ist, den vorgegebenen Bereich zu drücken, um das andere Ende der elastischen Anordnung (4) zum Auslösen des Schalters (3) anzutreiben, und der Schalter (3) dazu ausgebildet ist, ein Kollisionsereignis zu melden, wenn er ausgelöst wird.

2. Kollisionserkennungsvorrichtung nach Anspruch 1, bei welcher mehrere Begrenzungslöcher (102) in einer Bodenplatte (104) der Abdeckung (1) ausgebildet sind, und die Abdeckung (1) über die Begrenzungslöcher (102) bewegbar mit der Basis (2) verbunden ist.

3. Kollisionserkennungsvorrichtung nach Anspruch 2, bei welcher sich die Begrenzungslöcher (102) um eine erste Entfernung in eine erste Richtung erstrecken, so dass sich die Abdeckung (1) um die erste Entfernung in die erste Richtung bewegen kann.

4. Kollisionserkennungsvorrichtung nach Anspruch 2 oder Anspruch 3, ferner mit ersten Befestigungsteilen (5), wobei
ein Ende der ersten Befestigungsteile (5) in den Begrenzungslöchern (102) montiert ist, und das andere Ende der ersten Befestigungsteile (5) fest mit der Basis (2) verbunden ist, um die Abdeckung (1) mit der Basis (2) zu verbinden.

5. Kollisionserkennungsvorrichtung nach einem der Ansprüche 1 bis 4, bei welcher der Anlageteil (101) eine geneigte Einheit (1011) aufweist, wobei die geneigte Einheit (1011) dazu ausgebildet ist, in dem Zustand, dass die Abdeckung (1) eine Kollision erfährt und sich in eine eingestellte Richtung bewegt, den vorgegebenen Bereich zu drücken.

6. Kollisionserkennungsvorrichtung nach einem der Ansprüche 1 bis 5, bei welcher die Abdeckung (1) eine Bodenplatte (104) aufweist, die Bodenplatte (104) ein Begrenzungsteil (103) aufweist, und ein Ende des Begrenzungsteils (103) eine erste Schräge (1031) aufweist;
wobei ein Gegenstück (201) an einer Position vorgesehen ist, die dem Begrenzungsteil (103) der Basis (2) entspricht, und ein Ende des Gegenstücks (201) eine zweite Schräge (2011) aufweist, und die erste Schräge (1031) in Gleitkontakt mit der zweiten Schräge (2011) ist, so dass das Begrenzungsteil (103) in Gleitverbindung mit dem Gegenstück (201) ist.

7. Kollisionserkennungsvorrichtung nach Anspruch 6, bei welcher sich der Anlageteil (101) an einer Position an der Bodenplatte (104) in einer ersten vorbestimmten Entfernung von einer ersten Seite (105) der Bodenplatte (104) befindet; und
wobei sich das Begrenzungsteil (103) an einer Position an der Bodenplatte (104) in einer zweiten vorbestimmten Entfernung von einer zweiten Seite (106) der Bodenplatte (104) befindet, und/oder an einer Position an der Bodenplatte (104) in einer dritten vorbestimmten Entfernung von einer dritten Seite (107) der Bodenplatte (104) befindet, die zweite Seite (106) und die dritte Seite (107) gegenüberliegend angeordnet sind, und sich die erste Schräge (1031) an einem von dem Anlageteil (101) abgewandten Ende des Begrenzungsteils (103) befindet.

8. Kollisionserkennungsvorrichtung nach Anspruch 7, bei welcher sich die erste Seite (105) auf der Rückseite der Abdeckung (1) befindet.

9. Kollisionserkennungsvorrichtung nach einem der Ansprüche 1 bis 8, bei welcher die elastische Anordnung (4) eine Torsionsfeder (401) und ein zweites Befestigungsteil (402) aufweist, wobei das zweite Befestigungsteil (402) vertikal an der Basis (2) befestigt ist, und die Torsionsfeder (401) mit dem zweiten Befestigungsteil (402) verbunden ist; und
der vorgegebene Bereich ein Verbindungsbereich der Torsionsfeder (401) und des zweiten Befestigungsteils (402) ist.

10. Kollisionserkennungsvorrichtung nach Anspruch 9, bei welcher die Torsionsfeder (401) einen Hauptkörperteil (4011), einen ersten Arm (4012), und einen zweiten Arm (4013) aufweist;
wobei der Hauptkörperteil (4011) das zweite Befestigungsteil (402) umgibt, ein Ende des ersten Arms (4012) mit einem Ende des Hauptkörperteils (4011) verbunden ist, und das andere Ende des ersten Arms (4012) mit der Basis (2) verbunden ist; und ein Ende des zweiten Arms (4013) mit dem anderen Ende des Hauptkörperteils (4011) verbunden ist, und das andere Ende des zweiten Arms (4013) in Kontaktverbindung mit dem Schalter (3) steht.

11. Kollisionserkennungsvorrichtung nach Anspruch 10, bei welcher ein erstes Stützteil (202) und ein zweites Stützteil (203) auf der Basis (2) vorgesehen sind, der erste Arm (4012) fest mit dem ersten Stützteil (202) verbunden ist, und eine eingestellte Position des zweiten Arms (4013) in überlappender Verbindung mit dem zweiten Stützteil (203) ist.

12. Kollisionserkennungsvorrichtung nach einem der Ansprüche 1 bis 11, bei welcher die elastische Anordnung (4) eine Zugfeder (403) und eine Schwenkstange (404) aufweist;
wobei ein Ende der Zugfeder (403) fest mit der Basis (2) verbunden ist, das andere Ende der Zugfeder (403) mit einem Ende der Schwenkstange (404) verbunden ist, und das andere Ende der Schwenkstange (404) mit dem Schalter (3) verbunden ist; und
der vorgegebene Bereich ein Verbindungsbereich der Zugfeder (403) und der Schwenkstange (404) ist.

13. Kollisionserkennungsvorrichtung nach einem der Ansprüche 1 bis 12, bei welcher der Schalter (3) eine Auslöserstruktur (301) aufweist, und das andere Ende der elastischen Anordnung (4) in Anlageverbindung mit der Auslöserstruktur (301) ist.

14. Kollisionserkennungsvorrichtung nach einem der Ansprüche 1 bis 13, bei welcher der Schalter (3) ein Lichtemissionsteil (302) und ein Lichtempfangsteil (303) aufweist, und ein Lichtweg des Lichtemissionsteils (302) einem Lichtweg des Lichtempfangsteils (303) entgegengesetzt ist; und
wobei in dem Zustand, dass die Abdeckung (1) eine Kollision erfährt und sich in die eingestellte Richtung bewegt, sich das andere Ende der elastischen Anordnung (4) zu einer Position zwischen dem Lichtemissionsteil (302) und dem Lichtempfangsteil (303) bewegt, um die Lichtwege zu unterbrechen.

15. Reinigungsroboter mit der Kollisionserkennungsvorrichtung nach einem der Ansprüche 1-14.

## Revendications

1. Appareil de détection de collision pour un robot de balayage, comprenant :
une base (2) ;
un interrupteur (3), situé dans la base (2) ;
un ensemble élastique (4), situé dans la base (2), dans lequel une première extrémité de l'ensemble élastique (4) est reliée à la base (2), et l'autre extrémité de l'ensemble élastique (4) est reliée à l'interrupteur (3) ; et
un élément de recouvrement (1), relié mobile à la base (2) pour un déplacement sur une plage définie, dans lequel l'élément de recouvrement (1) comporte une partie de butée (101), et la partie de butée (101) est fixée par une partie prédéfinie de l'ensemble élastique (4) ;
**caractérisé en ce qu'**un premier côté de l'élément de recouvrement (1) est assemblé avec la base (2), et un deuxième côté de l'élément de recouvrement (1) forme un couvercle de protection en saillie qui est configuré pour recevoir un capteur laser de distance, dit LDS ;
dans lequel, dans un état dans lequel l'élément de recouvrement (1) subit une collision et est déplacé dans une direction définie, la partie de butée (101) est forcée pour pousser la partie prédéfinie, de façon à entraîner l'autre extrémité de l'ensemble élastique (4) pour déclencher l'interrupteur (3), et l'interrupteur (3) est configuré pour rapporter un événement de collision lorsqu'il a été déclenché.

2. Appareil de détection de collision selon la revendication 1, dans lequel les trous d'une pluralité de trous de limitation (102) sont ménagés dans une plaque inférieure (104) de l'élément de recouvrement (1), et l'élément de recouvrement (1) est relié mobile à la base (2) par l'intermédiaire des trous de limitation (102).

3. Appareil de détection de collision selon la revendication 2, dans lequel les trous de limitation (102) s'étendent sur une première distance dans une première direction, de sorte que l'élément de recouvrement (1) puisse se déplacer de la première distance dans la première direction.

4. Appareil de détection de collision selon la revendication 2 ou la revendication 3, comprenant en outre des premières pièces de fixation (5) ; dans lequel
des premières extrémités des premières pièces de fixation (5) sont assemblées avec les trous de limitation (102), et les autres extrémités des premières pièces de fixation (5) sont reliées à demeure à la base (2), de façon à relier l'élément de recouvrement (1) à la base (2).

5. Appareil de détection de collision selon l'une quelconque des revendications 1 à 4, dans lequel la partie de butée (101) comprend une unité de pan incliné (1011), dans lequel, dans l'état dans lequel l'élément de recouvrement (1) subit une collision et est déplacé dans la direction définie, l'unité de pan incliné (1011) est configurée pour pousser la partie prédéfinie.

6. Appareil de détection de collision selon l'une quelconque des revendications 1 à 5, dans lequel l'élément de recouvrement (1) comprend une plaque inférieure (104), la plaque inférieure (104) comporte une partie de limitation (103), et une première extrémité de la partie de limitation (103) comporte une première partie inclinée (1031) ;
une partie complémentaire (201) est située à une position, correspondant à la partie de limitation (103), de la base (2), et une première extrémité de la partie complémentaire (201) comporte une seconde partie inclinée (2011) ; et la première partie inclinée (1031) est en contact glissant avec la seconde partie inclinée (2011), de sorte que la partie de limitation (103) soit en contact glissant avec la partie complémentaire (202).

7. Appareil de détection de collision selon la revendication 6, dans lequel la partie de butée (101) est située à une première position, à une première distance prédéterminée d'un premier côté (105) de la plaque inférieure (104), de la plaque inférieure (104) ; et
la partie de limitation (103) est située à une position, à une deuxième distance prédéterminée d'un deuxième côté (106) de la plaque inférieure (104), de la plaque inférieure (104) et/ou à une position, à une troisième distance prédéterminée d'un troisième côté (107) de la plaque inférieure (104), de la plaque inférieure (104), le deuxième coté (106) et le troisième côté (107) sont disposés de manière opposée, et la première partie inclinée (1031) est située à une extrémité, à l'opposé de la partie de butée (101), de la partie de limitation (103).

8. Appareil de détection de collision selon la revendication 7, dans lequel le premier côté (105) est situé sur l'arrière de l'élément de recouvrement (1).

9. Appareil de détection de collision selon l'une quelconque des revendications 1 à 8, dans lequel l'ensemble élastique (4) comprend un ressort de torsion (401) et une seconde pièce de fixation (402) ; la seconde pièce de fixation (402) est fixée verticalement sur la base (2), et le ressort de torsion (401) est relié à la seconde pièce de fixation (402) ; et
la partie prédéfinie est une partie de liaison du ressort de torsion (401) et de la seconde pièce de fixation (402).

10. Appareil de détection de collision selon la revendication 9, dans lequel le ressort de torsion (401) comprend une partie corps principal (4011), un premier bras (4012) et un second bras (4013) ;
la parie corps principal (4011) est manchonnée sur la seconde pièce de fixation (402), une première extrémité du premier bras (4012) est reliée à une première extrémité de la partie corps principal (4011), et l'autre extrémité du premier bras (4012) est reliée à la base (2) ; et une première extrémité du second bras (4013) est reliée à l'autre extrémité de la parie corps principal (4011), et l'autre extrémité du second bras (4013) est reliée en contact avec l'interrupteur (3).

11. Appareil de détection de collision selon la revendication 10, dans lequel une première partie de support (202) et une seconde partie de support (203) sont situées sur la base (2), le premier bras (4012) est relié à demeure à la première partie de support (202), et une position définie du second bras (4013) est dans un état d'assemblage à recouvrement avec la seconde partie de support (203).

12. Appareil de détection de collision selon l'une quelconque des revendications 1 à 11, dans lequel l'ensemble élastique (4) comprend un ressort de traction (403) et une tige oscillante (404) ;
une première extrémité du ressort de traction (403) est reliée à demeure à la base (2), l'autre extrémité du ressort de traction (403) est reliée à une première extrémité de la tige oscillante (404), et l'autre extrémité de la tige oscillante (404) est reliée à l'interrupteur (3) ; et
la partie prédéfinie est une partie de liaison du ressort de traction (403) et de la tige oscillante (404).

13. Appareil de détection de collision selon l'une quelconque des revendications 1 à 12, dans lequel l'interrupteur (3) comprend une structure de déclenchement (301), et l'autre extrémité de l'ensemble élastique (4) est en contact de butée avec la structure de déclenchement (301) .

14. Appareil de détection de collision selon l'une quelconque des revendications 1 à 13, dans lequel l'interrupteur (3) comprend une partie d'émission de lumière (302) et une partie de réception de lumière (303), et un trajet de lumière de la partie d'émission de lumière (302) est contraire à un trajet de lumière de la partie de réception de lumière (303) ; et
dans l'état dans lequel l'élément de recouvrement (1) subit une collision et est déplacé dans la direction définie, l'autre extrémité de l'ensemble élastique (4) est déplacée jusqu'à une position située entre la partie d'émission de lumière (302) et la partie de réception de lumière (303) de façon à occulter les trajets de lumière.

15. Robot de balayage, comprenant l'appareil de détection de collision selon l'une quelconque des revendications 1 à 14.
